# EUROPEAN PATENT APPLICATION

(11) **EP 4 598 078 A1**
(43) Date of publication of application: **06.08.2025**
(21) Application number: 23870869.7
(22) Date of filing: 26.09.2023
(51) Int. Cl.: H04W 12/062

(54) **INFORMATION TRANSMISSION METHOD AND APPARATUS, AND DEVICE AND STORAGE MEDIUM**

(30) Priority: 30.09.2022 CN 202211215914
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Chang, Beijing 100053 (CN)
(74) Representative: Maiwald GmbH
(86) International application number: PCT/CN2023/121764
(87) International publication number: WO 2024/067642

(57) **Abstract**

Disclosed in the present application are an information transmission method and apparatus, and a device and a storage medium. The method comprises: receiving a first message sent by a second network function, wherein the first message comprises requested first data information; verifying the first message; and sending a second message to the second network function, wherein the second message comprises first information indicating successful authorization and/or second data information indicating that the request is allowed.

## Description

### CROSS-REFERENCE TO RELATED APPLICATIONS

This disclosure is based on and claims priority to Chinese patent application No.202211215914.0, filed on September 30, 2022, the entire contents of which are incorporated herein by reference.

### TECHNICAL FIELD

The disclosure relates to a field of wireless communication technology, and in particular to a method and an apparatus for information transmission, a device, and a storage medium.

### BACKGROUND

At present, cross-network data collection may be implemented via a network data analysis function (NWDAF) based on interconnection and intercommunication security. That is, the NWDAF of a visited network sends a data collection request to the NWDAF of a home network, and then the NWDAF of the home network collects the data and processes the collected data through a security policy and then feeds the data back to the NWDAF of the visited network. However, a service is required to be pre-registered in a network repository function (NRF) in order to initiate a cross-network data collection process, making the process somewhat cumbersome.

### SUMMARY

Accordingly, embodiments of the disclosure expect to provide a method and an apparatus for information transmission, a device, and a storage medium.

The technical solutions of the embodiments of the disclosure are implemented in the following.

At least one embodiment of the disclosure provides a method for information transmission. The method is applied to a first network function. The method includes: receiving a first message sent by a second network function, in which the first message includes requested first data information; verifying the first message; and sending a second message to the second network function, in which the second message includes first information indicating successful authorization and/or second data information indicating that a request is allowed.

In addition, in at least one embodiment of the disclosure, the second data information is included in the first information.

In addition, in at least one embodiment of the disclosure, the first information is a token, the second data information is a data type, and the data type is located within the token.

In addition, in at least one embodiment of the disclosure, verifying the first message includes:
verifying whether the second network function is capable of obtaining the first data information.

In addition, in at least one embodiment of the disclosure, the first message further includes at least one of:
a network element type of the second network function;
a network element type of a third network function; or
a service name that a target network function is expected to provided.

In addition, in at least one embodiment of the disclosure, the first network function and the second network function belong to different public land mobile networks (PLMNs).

At least one embodiment of the disclosure provides a method for information transmission. The method is applied to a second network function. The method includes: sending a first message, in which the first message includes requested first data information; and receiving a second message sent by a first network function, in which the second message includes first information indicating successful authorization and/or second data information indicating that a request is allowed.

In addition, in at least one embodiment of the disclosure, the second data information is included in the first information.

In addition, in at least one embodiment of the disclosure, the information is a token, the second data information is a data type, and the data type is located within the token.

In addition, in at least one embodiment of the disclosure, the method further includes:
verifying the first message by the first network function; in which
verifying the first message includes: verifying whether the second network function is capable of obtaining the first data information.

In addition, in at least one embodiment of the disclosure, the first message further includes at least one of:
a network element type of the second network function;
a network element type of a third network function; or
a service name that a target network function is expected to provide.

In addition, in at least one embodiment of the disclosure, the method further includes: sending a third message to a third network function, in which the third message includes at least one of:
the first information;
identification information of a PLMN where the second network function is located; or
third data information.

In addition, in at least one embodiment of the disclosure, the third data information is part or all of the second data information.

In addition, in at least one embodiment of the disclosure, the first information includes the third data information.

In addition, in at least one embodiment of the disclosure, the third message is Nnf_EventExposure_Subscribe or Nnwdaf_DataMangement_Subscribe.

In addition, in at least one embodiment of the disclosure, the method further includes: receiving data sent by the third network function.

In addition, in at least one embodiment of the disclosure, the data is processed data.

In addition, in at least one embodiment of the disclosure, the data is anonymized data and/or desensitized data.

At least one embodiment of the disclosure provides a method for information transmission. The method is applied to a third network function. The method includes: receiving a third message, in which the third message includes at least one of:
first information;
identification information of a PLMN where a second network function is located; or
third data information.

In addition, in at least one embodiment of the disclosure, the third data information is part or all of second data information.

In addition, in at least one embodiment of the disclosure, the first information includes the third data information.

In addition, in at least one embodiment of the disclosure, the third message is Nnf_EventExposure_Subscribe.

In addition, in at least one embodiment of the disclosure, the method further includes: verifying at least one of:
the first information in the third message;
the identification information of the PLMN where the second network function is located; or
whether the third data information is related to data information requested by the third message.

In addition, in at least one embodiment of the disclosure, the method further includes:
sending data to the second network function.

In addition, in at least one embodiment of the disclosure, before sending the data to the second network function, the method further includes:
processing the data.

In addition, in at least one embodiment of the disclosure, processing the data includes: anonymizing the data and/or desensitizing the data.

At least one embodiment of the disclosure provides a method for information transmission. The method is applied to a fourth network function. The method includes: receiving a third message, in which the third message includes at least one of:
first information;
identification information of a PLMN where a second network function is located; or
third data information.

In addition, in at least one embodiment of the disclosure, the third data information is part or all of second data information.

In addition, in at least one embodiment of the disclosure, the first information includes the third data information.

In addition, in at least one embodiment of the disclosure, the third message is Nnwdaf_DataMangement_Subscribe.

In addition, in at least one embodiment of the disclosure, the method further includes: verifying at least one of:
the first information in the third message;
the identification information of the PLMN where the second network function is located; or
whether the third data information is related to data information requested by the third message.

In addition, in at least one embodiment of the disclosure, the method further includes:
sending a fourth message to a third network function; and
receiving data sent by the third network function.

In addition, in at least one embodiment of the disclosure, the method further includes:
sending data to the second network function.

In addition, in at least one embodiment of the disclosure, before sending the data to the second network function, the method further includes:
processing the data.

In addition, in at least one embodiment of the disclosure, processing the data includes: anonymizing the data and/or desensitizing the data.

At least one embodiment of the disclosure provides an apparatus for information transmission. The apparatus includes:
a first receiving unit, configured to receive a first message sent by a second network function, in which the first message includes requested first data information;
a processing unit, configured to verify the first message; and
a first sending unit, configured to send a second message to the second network function, in which the second message includes first information indicating successful authorization and/or second data information indicating that a request is allowed.

At least one embodiment of the disclosure provides an apparatus for information transmission. The apparatus includes:
a second sending unit, configured to send a first message, in which the first message includes requested first data information; and
a second receiving unit, configured to receive a second message sent by a first network function, in which the second message includes first information indicating successful authorization and/or second data information indicating that a request is allowed.

At least one embodiment of the disclosure provides an apparatus for information transmission. The apparatus includes:
a third receiving unit, configured to receive a third message, in which the third message includes at least one of:
first information;
identification information of a PLMN where a second network function is located; or
third data information.

At least one embodiment of the disclosure provides an apparatus for information transmission. The apparatus includes:
a fourth receiving unit, configured to receive a third message, in which the third message includes at least one of:
first information;
identification information of a PLMN where a second network function is located; or
third data information.

At least one embodiment of the disclosure provides a network device. The network device includes: a processor and a memory storing a computer program executable by the processor,
in which when the computer program is executed by the processor, steps of any method described above are implemented.

At least one embodiment of the disclosure provides a computer-readable storage medium. The computer-readable storage medium stores a computer program that, when executed by a processor, steps of any method described above are implemented.

The embodiments of the disclosure provide a method and an apparatus for information transmission, a device, and a storage medium. A first message sent by a second network function is received, in which the first message includes requested first data information. The first message is verified. A second message is sent to the second network function, in which the second message includes the first information indicating the successful authorization and/or the second data information indicating that a request is allowed. With the technical solution provided in embodiments of the disclosure, there is no need to pre-register the service when implementing cross-network data collection. The cross-network data collection process may be initiated after the first network function verifies the first message and receives the second message sent by the first network function.

### BRIEF DESCRIPTION OF THE DRAWINGS

FIG. 1 is a schematic diagram illustrating an implementation for cross-network data collection based on a network data analysis function (NWDAF) in the related art.
FIG. 2 is a first flow chart illustrating a method for information transmission according to the embodiments of the disclosure.
FIG. 3 is a second flow chart illustrating a method for information transmission according to the embodiments of the disclosure.
FIG. 4 is a third flow chart illustrating a method for information transmission according to the embodiments of the disclosure.
FIG. 5 is a fourth flow chart illustrating a method for information transmission according to the embodiments of the disclosure.
FIG. 6 is a first detailed flow chart illustrating a method for information transmission according to the embodiments of the disclosure.
FIG. 7 is a second detailed flow chart illustrating a method for information transmission according to the embodiments of the disclosure.
FIG. 8 is a first block diagram illustrating a structure of an apparatus for information transmission according to the embodiments of the disclosure.
FIG. 9 is a second block diagram illustrating a structure of an apparatus for information transmission according to the embodiments of the disclosure.
FIG. 10 is a third block diagram illustrating a structure of an apparatus for information transmission according to the embodiments of the disclosure.
FIG. 11 is a fourth block diagram illustrating a structure of an apparatus for information transmission according to the embodiments of the disclosure.
FIG. 12 is a block diagram illustrating a structure of a network device according to the embodiments of the disclosure.

### DETAILED DESCRIPTION

Before presenting the technical solutions of the embodiments of the disclosure, the related technologies are described.

In the related art, cross-network data collection may be implemented via a network data analysis function (NWDAF) based on interconnection and intercommunication security. That is, an NWDAFc of a visited network sends a data collection request to an NWDAFp of a home network. The NWDAFp of the home network verifies the data collection request and collects data from a network function (NF) of the home network after the verification is passed. The NWDAFp of the home network then performs a security process on the data collected from the NF of the home network based on a local security policy, and feeds the data back to the NWDAFc of the visited network across the network.

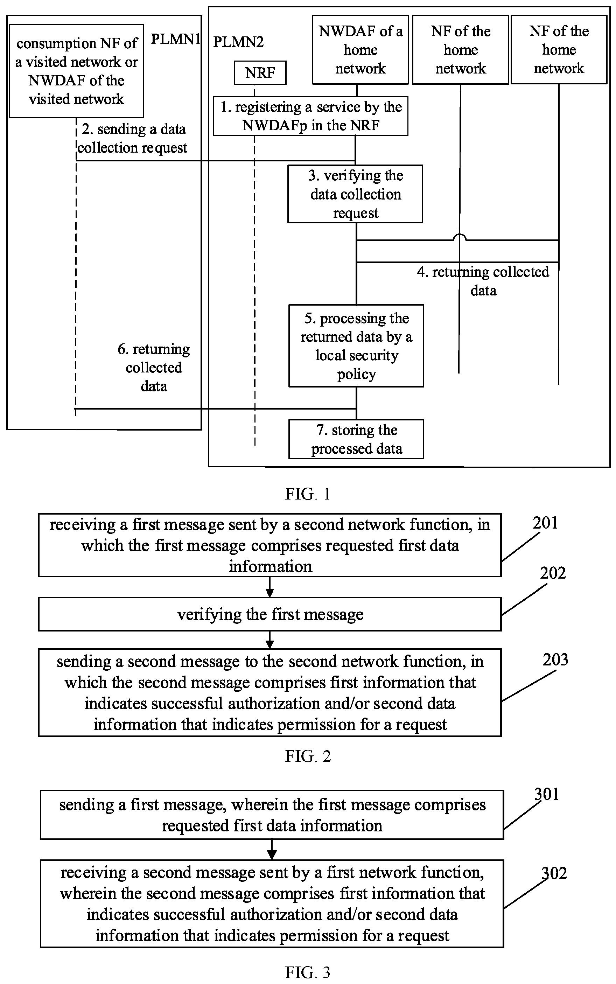

FIG. 1 is a schematic diagram illustrating an implementation for cross-network data collection based on an NWDAF in the related art. As shown in FIG. 1, in the existing 5G technical solution, the 3rd generation partnership project (3GPP) defines a method for cross-network data collection based on the NWDAF. That is, the NWDAF of a visited network sends a data collection request to the NWDAF of a home network, and then the NWDAF of the home network collects the data from the NF of the home network, processes the collected data based on a security policy and then feeds the data back to the NWDAF of the visited network.

At present, the technical solution for implementing the cross-network data collection based on the NWDAF has the following technical deficiencies. First, in some cases, the NWDAF of the home network may not be capable of collecting the data requested by the NWDAF of the visited network, resulting in the failure of the NWDAF of the visited network to obtain the data. Second, a determination function needs to be added to the NWDAF of the home network. The determination function is required to determine whether the request from the NWDAF of the visited network should be processed based on the policy of the home network, a network element type, a data type, or a service type. Third, a new service needs to be defined and pre-registered in a network repository function (NRF) so that the process of implementing the cross-network data collection based on the NWDAF can be initiated.

Based on the above, in an embodiment of the disclosure, a first message sent by a second network function is received, in which the first message includes requested first data information. The first message is verified. A second message is sent to the second network function, in which the second message includes first information indicating successful authorization and/or second data information indicating that a request is allowed.

FIG. 2 is a flow chart illustrating a method for information transmission according to the embodiments of the disclosure. The method is applied to a first network function. As shown in FIG. 2, the method includes the following steps 201 to 203.

At step 201: a first message sent by a second network function is received, in which the first message includes requested first data information.

In this case, receiving the first message sent by the second network function may be understood as forwarding, by the second network function, the first message to the first network function via other network functions.

At step 202: the first message is verified.

At step 203: a second message is sent to the second network function, in which the second message includes first information indicating successful authorization and/or second data information indicating that a request is allowed.

In this case, sending the second message to the second network function may be understood as forwarding, by the first network function, the second message to the second network function via other network functions.

In this case, the first data information may be understood as data information that the second network function needs to (desires to) obtain. The first data information may include at least one of the following: a data name, data identification information, a data type, a data attribute, and the like.

The first information herein may specifically be a token. The token indicates the successful authorization. This is only an example, and the disclosure does not limit the specific ways of indicating the successful authorization.

The second data information herein may be understood as data information that the first network function allows the second network function to access. In particular, the data information may include a data name, data identification information, a data type, a data attribute, and the like, which the second network function is allowed to obtain. The second data information herein may be the same as or different from the first data information. For example, the first data information includes a request for three data types of A, B, and C. The second data information may include the three data types of A, B, and C, or may include at least one data type of A, B, and C. If the second data information does not include all the three data types of A, B, and C, it indicates that the first network function allows only one or two of the data types to be obtained.

In this case, verifying the first message may refer to verifying the first data information in the first message.

In this case, sending the second message to the second network function may refer to sending the second message to the second network function in the case that the verification is passed.

In an embodiment, the second data information is included in the first information.

It may be understood that in the case that the first information is a token, the second data information may be within the token. In particular, the second data information may be indicated in the token or included in the token, and the like.

In an embodiment, the first information is a token, the second data information is a data type, and the data type is located within the token.

In an embodiment, verifying the first message includes: verifying whether the second network function is capable of obtaining the first data information.

It may be understood that in the case that the first data information includes a plurality of data names/data identification information/data types, verifying whether the second network function is capable of obtaining the first data information may refer to verifying whether the second network function is capable of obtaining part or all of the data names/data identification information/data types.

In an embodiment, the first message further includes at least one of: a network element type of the second network function; a network element type of a third network function; or a service name a target network function is expected to provide.

It may be understood that the network element type of the second network function herein may be referred to as a NF consumer type. The network element type of the third network function may also be referred to as a target NF type. The third network function herein refers to a NF that is cable of providing the requested data to the second network function. The second network function may know which third network function it should request data from. The service name that the target network function is expected to provide may be an expected NF service name.

In an embodiment, the first network function and the second network function belong to different public land mobile networks (PLMNs).

For example, the first network function is a NF of a home network, which may specifically be a network repository function (NRF) of the home network. The second network function is a NF of a visited network, which may specifically be an NWDAF of the visited network.

The embodiments of the disclosure have the following advantages.
(1) When implementing the cross-network data collection, the first network function determines the data that the second network function is allowed to request. This ensures that only allowed data may be provided to the second network function, maximizing the reuse of the current standard process. The determination function and determination strategy are centralized in the first network function, which better aligns with the current standard logic and process.
(2) By expanding a verification parameter carried in the first message, that is, by expanding a new verification parameter, i.e., the first data information in the first message, the first network function verifies the first message based on the verification parameter, which ensures that only allowed data may be provided to the second network function.
(3) It is not necessary to pre-register the service in the first network function to initiate the data collection process.
(4) A method for obtaining data is provided. In the case that relevant data exists in a third network function of a heterogeneous network, the second network function requests the data directly from the third network function of the heterogeneous network.

FIG. 3 is a flow chart illustrating a method for information transmission according to the embodiments of the disclosure. The method is applied to a second network function. As shown in FIG. 3, the method includes the following steps 301 to 302.

At step 301: a first message is sent, in which the first message includes requested first data information.

In this case, sending the first message may be understood as forwarding, by the second network function, the first message to the first network function via other network functions.

At step 302: a second message sent by a first network function is received, in which the second message includes first information indicating successful authorization and/or second data information indicating that a request is allowed.

In this case, receiving the second message sent by the first network function may be understood as forwarding, by the first network function, the second message to the second network function via other network functions.

In an embodiment, the second data information is included in the first information.

In an embodiment, the first information is a token, the second data information is a data type, and the data type is located within the token.

In an embodiment, the method further includes: verifying the first message by the first network function; in which verifying the first message includes: verifying whether the second network function is capable of obtaining the first data information.

In an embodiment, the first message further includes at least one of:
a network element type of the second network function;
a network element type of a third network function; or
a service name a target network function is expected to provide.

That is, the second network function itself may know which third network function it should request data information from. After receiving the second message, the second network function may learn what data information is allowed to obtain from the first network function, and the second network function sends the third message to the corresponding third network function to request the data.

In an embodiment, the method further includes:
sending a third message to a third network function, in which the third message includes at least one of:
the first information;
identification information of a PLMN where the second network function is located; or
third data information.

In an embodiment, the third data information is part or all of the second data information.

In this case, the third data information is a full set or a subset of the second data information.

For example, if the second data information is three data types of A, B, and C, it indicates that the first network function allows the second network function to obtain the three data types of data. Based on the previous description, the second network function may know which third network function(s) to obtain the three data types of data. If data with the data type of A is maintained by a certain third network function, the second network function may send a request (i.e., the third message, in which the third message may be a message requesting the data) to the third network function to request the data with the data type A.

After receiving the third message, the third network function verifies at least one of:
the first information (e.g., a token) in the third message;
the identification information of the PLMN where the second network function is located; or
whether the third data information in the third message matches the data information actually requested by the third message (the third data information may be located within the first message, or may be located outside the first message and within the third message).

In an embodiment, the first information includes the third data information.

In an embodiment, the third message is Nnf_EventExposure_Subscribe or Nnwdaf_DataMangement_Subscribe.

It should be noted that Nnf_EventExposure_Subscribe as well as Nnwdaf_DataMangement_Subscribe is a message flow in existing protocols. The disclosure reuses the message and carries the first information and/or the identification information of the PLMN where the second network function is located in the message, thus enabling reuse of existing messages without adding additional signaling overhead.

In an embodiment, the method further includes:
receiving data sent by the third network function.

In an embodiment, the data is processed data.

In an embodiment, the data is anonymized data and/or desensitized data.

It should be noted that the third network function belongs to the same

PLMN as the first network function, and the second network function belongs to a different PLMN from a PLMN which the third network function and the first network function belong to.

The embodiments of the disclosure have the following advantages.
(1) When implementing the cross-network data collection, the first network function determines the data that the second network function is allowed to request, which ensures that only allowed data may be provided to the second network function, maximizing the reuse of the current standard process. The determination function and determination strategy are centralized in the first network function, which better aligns with the current standard logic and process.
(2) By expanding a verification parameter carried in the first message, that is, by expanding a new verification parameter, i.e., the first data information in the first message, the first network function verifies the first message based on the verification parameter, which ensures that only allowed data may be provided to the second network function.
(3) It is not necessary to pre-register the service in the first network function to initiate the data collection process.
(4) A method for obtaining data is provided. In the case that relevant data exists in a third network function of a heterogeneous network, the second network function requests the data directly from the third network function of the heterogeneous network.

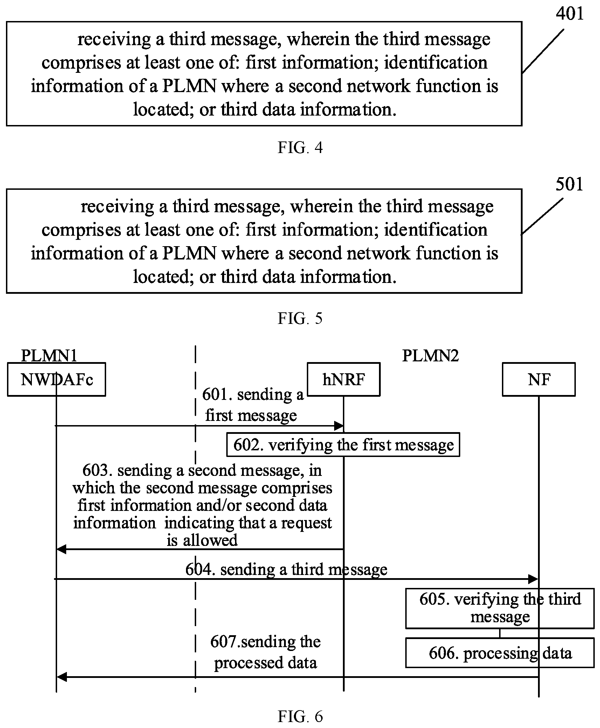

FIG. 4 is a flow chart illustrating a method for information transmission according to the embodiments of the disclosure. The method is applied to a third network function. As shown in FIG. 4, the method includes the following step 401.

At step 401: a third message is received, in which the third message includes at least one of:
first information;
identification information of a PLMN where a second network function is located; or
third data information.

In an embodiment, the third data information is part or all of second data information.

In an embodiment, the first information includes the third data information.

In an embodiment, the third message is Nnf_EventExposure_Subscribe.

In an embodiment, the method further includes: verifying at least one of:
the first information in the third message;
the identification information of the PLMN where the second network function is located; or
verifying whether the third data information is related to data information requested by the third message.

In this case, whether the third data information is related to data information requested by the third message may be understood as: whether the third data information is consistent with the data information requested by the third message; or, whether the data information requested by the third message is a subset of the third data information. There may be other ways of understanding, which are not limited in the application.

In an embodiment, the method further includes:
sending data to the second network function.

In an embodiment, before sending the data to the second network function, the method further includes:
processing the data.

In an embodiment, processing the data includes: anonymizing the data and/or desensitizing the data.

The embodiments of the disclosure have the following advantages.
(1) When implementing the cross-network data collection, the first network function determines the data that the second network function is allowed to request. This ensures that only allowed data may be provided to the second network function, maximizing the reuse of the current standard process. The determination function and determination strategy are centralized in the first network function, which better aligns with the current standard logic and process.
(2) By expanding a verification parameter carried in the first message, that is, by expanding a new verification parameter, i.e., the first data information in the first message, the first network function verifies the first message based on the verification parameter, which ensures that only allowed data may be provided to the second network function.
(3) It is not necessary to pre-register the service in the first network function to initiate the data collection process.
(4) A method for obtaining data is provided. In the case that relevant data exists in a third network function of a heterogeneous network, the second network function requests the data directly from the third network function of the heterogeneous network.

FIG. 5 is a flow chart illustrating a method for information transmission according to the embodiments of the disclosure. The method is applied to a fourth network function. As shown in FIG. 5, the method includes the following step 501.

At step 501: a third message is received, in which the third message includes at least one of:
first information;
identification information of a PLMN where a second network function is located; or
third data information.

In an embodiment, the third data information is part or all of second data information.

In an embodiment, the first information includes the third data information.

In an embodiment, the third message is Nnwdaf_DataMangement_Subscribe.

In an embodiment, the method further includes: verifying at least one of:
the first information in the third message;
the identification information of the PLMN where the second network function is located; or
whether the third data information is related to data information requested by the third message.

In this case, whether the third data information is related to data information requested by the third message may be understood as: whether the third data information is consistent with the data information requested by the third message; or, whether the data information requested by the third message is a subset of the third data information. There may be other ways of understanding, which are not limited in the application.

In an embodiment, the method further includes:
sending a fourth message to a third network function; and
receiving data sent by the third network function.

In an embodiment, the method further includes:
sending data to the second network function.

In an embodiment, before sending the data to the second network function, the method further includes:
processing the data.

In an embodiment, processing the data includes: anonymizing the data and/or desensitizing the data.

The embodiments of the disclosure have the following advantages.
(1) When implementing the cross-network data collection, the first network function determines the data that the second network function is allowed to request. This ensures that only allowed data may be provided to the second network function, maximizing the reuse of the current standard process. The determination function and determination strategy are centralized in the first network function, which better aligns with the current standard logic and process.
(2) By expanding a verification parameter carried in the first message, that is, by expanding a new verification parameter, i.e., the first data information in the first message, the first network function verifies the first message based on the verification parameter, which ensures that only allowed data may be provided to the second network function.
(3) It is not necessary to pre-register the service in the first network function to initiate the data collection process.
(4) Another method for data collection is provided. The fourth network function collects data from the third network function as a proxy, and returns the data to the second network function via the fourth network function.

FIG. 6 is a detailed flow chart illustrating a method for information transmission according to the embodiments of the disclosure. The first network function described above corresponds to an NRF of the home network, represented as hNRF. The second network function described above corresponds to an NWDAF of the visited network, represented as NWDAFc. The third network function described above corresponds to a NF of the home network. As shown in FIG. 6, the method includes the following steps 601 to 607.

At step 601: the NWDAFc sends a first message to the hNRF, in which the first message includes requested first data information.

In this case, the NWDAFc may forward the first message to the hNRF via other network elements, such as a visited Network Repository Function (vNRF).

In this case, the first data information may be understood as data information that the NWDAFc needs to (desires to) obtain.

In this case, the first data information may include at least one of the following: a data name, data identification information, a data type, a data attribute, and the like.

In this case, the first message further includes at least one of:
a network element type of the second network function;
a network element type of a third network function; or
a service name a target network function is expected to provide.

In this case, the network element type of the second network function may be a NF consumer type.

In this case, the network element type of the third network function may also be referred to as a target NF type. The third network function herein refers to a NF that is cable of providing the requested data to the second network function.

In this case, the service name that the target network function is expected to provide may be an expected NF service name.

In this case, a PLMN identifier corresponding to the visited network is PLMN1, and a PLMN identifier corresponding to the home network is PLMN2.

At step 602: the hNRF verifies the first message.

In this case, verifying the first message may refer to verifying the first data information in the first message.

In this case, verifying the first message includes:
verifying whether the NWDAFc is capable of obtaining the first data information.

In this case, in the case that the first data information includes a plurality of data names/data identification information/data types, verifying whether the NWDAFc is capable of obtaining the first data information may refer to verifying whether the NWDAFc is capable of obtaining part or all of the data names/data identification information/data types.

In this case, the hNRF may verify whether the NWDAFc is capable of obtaining the first data information based on a preset list stored in a local policy. In particular, data information that is allowed to be provided by the NF to the NWDAFc is searched from the preset list based on a network element type of the NWDAFc, a network element type of the NF carried in the first message. If found data information is identical to part or all of the first data information requested by the NWDAFc, it indicates that the NF is allowed to provide the found data information to the NWDAFc.

At step 603: in the case that the first message passes the verification, a second message is sent to the NWDAFc, in which the second message includes the first information and/or second data information indicating that a request is allowed.

In this case, the hNRF may forward the second message to the NWDAFc via other network elements such as the vNRF.

In this case, the first information is a token. The NWDAFc is authorized by sending the token to the NWDAFc. The second data information is a data type, and the data type is located within the token.

At step 604: the NWDAFc sends a third message to the NF.

In this case, the third message is Nnf_EventExposure_Subscribe.

In this case, the third message includes at least one of:
the first information;
identification information of a PLMN where the second network function is located; or
third data information.

In this case, the third data information is part or all of the second data information.

At step 605: the NF verifies the third message.

In this case, after receiving the third message, the NF verifies at least one of:
the first information (e.g., token) in the third message;
the identification information of the PLMN where the second network function is located; or
whether the third data information in the third message matches the data information actually requested by the third message (the third data information may be located within the first message, or may be located outside the first message and within the third message).

In this case, if the NF verifies that the third data information in the token matches the data information requested by the third message, and verifies that a requester is a NWDAF of another PLMN, then step 606 is performed.

At step 606: the NF anonymizes data and/or desensitizes the data.

At step 607: the NF sends the processed data to the NWDAFc.

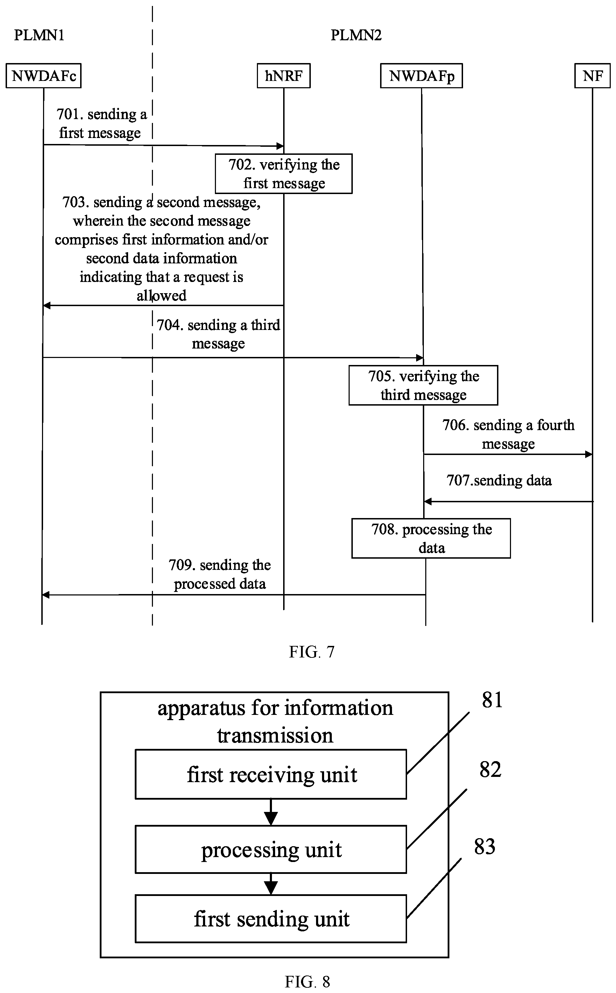

FIG. 7 is a detailed flow chart illustrating a method for information transmission according to the embodiments of the disclosure. The first network function described above corresponds to an NRF of the home network, represented as hNRF. The second network function described above corresponds to an NWDAF of the visited network, represented as NWDAFc. The third network function described above corresponds to a NF of the home network. The fourth network function described above corresponds to an NWDAF of the home network, represented as NWDAFp. As shown in FIG. 7, the method includes the following steps 701 to 709.

At step 701: the NWDAFc sends a first message to the hNRF, in which the first message includes requested first data information.

In this case, the NWDAFc may forward the first message to the hNRF via other network elements, such as a vNRF.

In this case, the first data information may be understood as data information that the NWDAFc needs to (desires to) obtain.

In this case, the first data information may include at least one of the following: a data name, data identification information, a data type, a data attribute, and the like.

In this case, the first message further includes at least one of:
a network element type of the second network function;
a network element type of the third network function; or
a service name a target network function is expected to provide.

In this case, the network element type of the second network function may be an NF consumer type.

In this case, the network element type of the third network function may also be referred to as a target network function type. The third network function herein refers to an NF that is cable of providing the requested data to the second network function.

In this case, the service name that the target network function is expected to provide may be an expected NF service name.

In this case, a PLMN identifier corresponding to the visited network is PLMN1, and a PLMN identifier corresponding to the home network is PLMN2.

At step 702: the hNRF verifies the first message.

In this case, verifying the first message may refer to verifying the first data information in the first message.

In this case, verifying the first message includes: verifying whether the NWDAFc is capable of obtaining the first data information.

In this case, in the case that the first data information includes a plurality of data names/data identification information/data types, verifying whether the NWDAFc is capable of obtaining the first data information may refer to verifying whether the NWDAFc is capable of obtaining part or all of the data names/data identification information/data types.

In this case, the hNRF may verify whether the NWDAFc is capable of obtaining the first data information based on a preset list stored in a local policy. In particular, the data information that is allowed to be provided by the NF to the NWDAFc is searched from the preset list based on a network element type of the NWDAFc, a network element type of the NF carried in the first message. If the found data information is identical to part or all of the first data information requested by the NWDAFc, it indicates that the NF is allowed to provide the found data information to the NWDAFc.

At step 703: in a case that the first message passes the verification, a second message is sent to the NWDAFc, in which the second message includes first information and/or second data information indicating that a request is allowed.

In this case, the hNRF may forward the second message to the NWDAFc via other network elements such as the vNRF.

In this case, the first information is a token. The NWDAFc is authorized by sending the token to the NWDAFc. The second data information is a data type, and the data type is located within the token.

At step 704: the NWDAFc sends a third message to the NWDAFp.

In this case, the third message is Nnf_EventExposure_Subscribe.

In this case, the third message includes at least one of:
the first information;
identification information of a PLMN where the second network function is located; or
third data information.

In this case, the third data information is part or all of the second data information.

In this case, the third data information is a full set or a subset of the second data information.

At step 705: the NWDAFp verifies the third message.

In this case, after receiving the third message, the NWDAFp verifies at least one of:
the first information (e.g., a token) in the third message;
the identification information of the PLMN where the second network function is located; or
whether the third data information in the third message matches the data information actually requested by the third message (the third data information may be located within the first message, or may be located outside the first message and within the third message).

In this case, if the NF verifies that the third data information in the token matches the data information requested by the third message, and verifies that a requester is a NWDAF of another PLMN, then step 706 is performed.

At step 706: the NWDAFp sends a fourth message to the NF of the home network for requesting the relevant data.

At step 707: the NF of the home network returns the data to the NWDAFp.

At step 708: the NWDAFp anonymizes the data or desensitizes the data.

At step 709: the NWDAFp returns the processed data to the NWDAFc.

In order to implement the method for information transmission in the embodiments of the disclosure, the embodiments of the disclosure also provide an apparatus for information transmission, configured in a first network function. FIG. 8 is a block diagram illustrating a structure of an apparatus for information transmission according to the embodiments of the disclosure. As shown in FIG. 8, the apparatus includes a first receiving unit 81, a processing unit 82 and a first sending unit 83.

The first receiving unit 81 is configured to receive a first message sent by a second network function, in which the first message includes requested first data information.

The processing unit 82 is configured to verify the first message.

The first sending unit 83 is configured to send a second message to the second network function, in which the second message includes first information indicating successful authorization and/or second data information indicating that a request is allowed.

In an embodiment, the second data information is included in the first information.

In an embodiment, the first information is a token, the second data information is a data type, and the data type is located within the token.

In an embodiment, the processing unit 82 is configured to verify whether the second network function is capable of obtaining the first data information.

In an embodiment, the first message further includes at least one of:
a network element type of the second network function;
a network element type of a third network function; or
an expected service name provided by a target network function.

In an embodiment, the first network function and the second network function belong to different PLMNs.

In practice, the first receiving unit 81, the first sending unit 83 may be implemented via a communication interface in the apparatus for information transmission. The processing unit 82 may be implemented via a processor in the apparatus for information transmission.

It should be noted that the apparatus for information transmission provided in the above embodiments is only exemplified by the division of each of the above-described program modules when transmitting information. In practical application, the above processing may be assigned to be completed by different program modules as needed, i.e., an internal structure of the apparatus may be divided into different program modules to complete all or part of the above processing. In addition, the apparatus for information transmission provided in the above embodiments belongs to a same concept as the embodiments of the method for information transmission. The specific realization process is described in detail in the embodiments of the method, and will not be repeated herein.

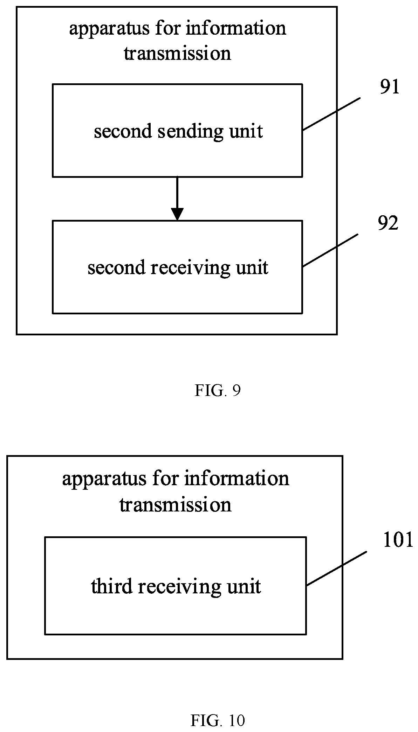

In order to implement the method for information transmission in the embodiments of the disclosure, the embodiments of the disclosure also provide an apparatus for information transmission, configured in a second network function. FIG. 9 is a block diagram illustrating a structure of an apparatus for information transmission according to the embodiments of the disclosure. As shown in FIG. 9, the apparatus includes a second sending unit 91 and a second receiving unit 92.

The second sending unit is configured to send a first message, in which the first message includes requested first data information.

The second receiving unit is configured to receive a second message sent by a first network function, in which the second message includes first information indicating successful authorization and/or second data information indicating that a request is allowed.

In an embodiment, the second data information is included in the first information.

In an embodiment, the first information is a token, the second data information is a data type, and the data type is located within the token.

In an embodiment, the first network function verifies the first message, in which verifying the first message includes: verifying whether the second network function is capable of obtaining the first data information.

In an embodiment, the first message further includes at least one of:
a network element type of the second network function;
a network element type of a third network function; or
an expected service name provided by a target network function.

In an embodiment, the apparatus is further configured to send a third message to a third network function, in which the third message includes at least one of:
the first information;
identification information of a PLMN where the second network function is located; or
third data information.

In an embodiment, the third data information is part or all of the second data information.

In an embodiment, the first information includes the third data information.

In an embodiment, the third message is Nnf_EventExposure_Subscribe or Nnwdaf_DataMangement_Subscribe.

In an embodiment, the apparatus is further configured to receive data sent by the third network function.

In an embodiment, the data is processed data.

In an embodiment, the data is anonymized data and/or desensitized data.

In practice, the second sending unit 91 and the second receiving unit 92 may be implemented via a communication interface in the apparatus for information transmission.

It should be noted that the apparatus for information transmission provided in the above embodiments is only exemplified by the division of each of the above-described program modules when transmitting information. In practical application, the above processing may be assigned to be completed by different program modules as needed, i.e., an internal structure of the apparatus may be divided into different program modules to complete all or part of the above processing. In addition, the apparatus for information transmission provided in the above embodiments belongs to a same concept as the embodiments of the method for information transmission. The specific realization process is described in detail in the embodiments of the method, and will not be repeated herein.

In order to implement the method for information transmission in the embodiments of the disclosure, the embodiments of the disclosure also provide an apparatus for information transmission, configured in a third network function. FIG. 10 is a block diagram illustrating a structure of an apparatus for information transmission according to the embodiments of the disclosure. As shown in FIG. 10, the apparatus includes a third receiving unit 101.

The third receiving unit 101 is configured to receive a third message, in which the third message includes at least one of:
first information;
identification information of a PLMN where a second network function is located; or
third data information.

In an embodiment, the third data information is part or all of second data information.

In an embodiment, the first information includes the third data information.

In an embodiment, the third message is Nnf_EventExposure_Subscribe.

In an embodiment, the apparatus is further configured to verify at least one of:
the first information in the third message;
the identification information of the PLMN where the second network function is located; or
whether the third data information is related to data information requested by the third message.

In an embodiment, the apparatus is further configured to send data to the second network function.

In an embodiment, the apparatus is further configured to process the data.

In an embodiment, the apparatus is further configured to anonymize the data and/or desensitize the data.

In practice, the third receiving unit 101 may be implemented via a communication interface in the apparatus for information transmission.

It should be noted that the apparatus for information transmission provided in the above embodiments is only exemplified by the division of each of the above-described program modules when transmitting information. In practical application, the above processing may be assigned to be completed by different program modules as needed, i.e., an internal structure of the apparatus may be divided into different program modules to complete all or part of the above processing. In addition, the apparatus for information transmission provided in the above embodiments belongs to a same concept as the embodiments of the method for information transmission. The specific realization process is described in detail in the embodiments of the method, and will not be repeated herein.

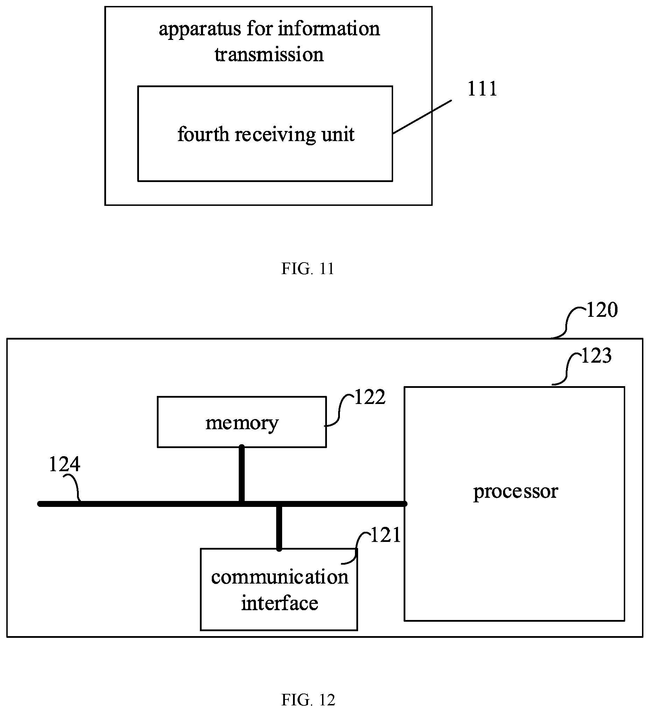

In order to implement the method for information transmission in the embodiments of the disclosure, the embodiments of the disclosure further provide an apparatus for information transmission, configured in a fourth network function. FIG. 11 is a block diagram illustrating a structure of an apparatus for information transmission according to the embodiments of the disclosure. As shown in FIG. 11, the apparatus includes a fourth receiving unit 111.

The fourth receiving unit 111 is configured to receive a third message, in which the third message includes at least one of:
first information;
identification information of a PLMN where a second network function is located; or
third data information.

In an embodiment, the third data information is part or all of second data information.

In an embodiment, the first information includes the third data information.

In an embodiment, the third message is Nnwdaf_DataMangement_Subscribe.

In an embodiment, the apparatus is further configured to verify at least one of:
the first information in the third message;
the identification information of the PLMN where the second network function is located; or
whether the third data information is related to data information requested by the third message.

In an embodiment, the apparatus is further configured to send a fourth message to a third network function; and receive data sent by the third network function.

In an embodiment, the apparatus is further configured to send data to the second network function.

In an embodiment, the apparatus is further configured to process the data.

In an embodiment, the apparatus is further configured to anonymize the data and/or desensitize the data.

In practice, the fourth receiving unit 111 may be implemented via a communication interface in the apparatus for information transmission.

It should be noted that the apparatus for information transmission provided in the above embodiments is only exemplified by the division of each of the above-described program modules when transmitting information. In practical application, the above processing may be assigned to be completed by different program modules as needed, i.e., an internal structure of the apparatus may be divided into different program modules to complete all or part of the above processing. In addition, the apparatus for information transmission provided in the above embodiments belongs to a same concept as the embodiments of the method for information transmission. The specific realization process is described in detail in the embodiments of the method, and will not be repeated herein.

The embodiments of the disclosure further provide a device. As shown in FIG. 12, the device includes a communication interface 121, a processor 122, a memory 123 and a bus system 124.

The communication interface 121 is capable of performing information interaction with other devices.

The processor 122 is connected to the communication interface 121, configured to execute the method provided by one or more technical solutions on the apparatus side as described above when running a computer program. The computer program is stored on the memory 123.

It should be noted that the specific processing processes of the processor 122 and the communication interface 121 may refer to the method embodiments and are not repeated herein.

In practice, components in the network device 120 are coupled together via the bus system 124. It should be understood that the bus system 124 is configured to realize connection communications between the components. The bus system 124 further includes a power bus, a control bus, and a status signal bus in addition to a data bus. However, for clarity of illustration, various buses are labeled as the bus system 124 in FIG. 12.

In embodiments of the disclosure, the memory 123 is configured to store various types of data to support the operation of the network device 120. Examples of such data include any computer program configured to operate on the network device 120.

The method disclosed in embodiments of the disclosure may be applied to the processor 122 or implemented by the processor 122. The processor 122 may be an integrated circuit chip with a signal processing capability. In an implementation process, each step of the above method may be completed by an integrated logic circuit of hardware or instructions in the form of software in the processor 122. The processor 122 above may be a general processor, a digital signal processor (DSP), or other programmable logic devices, discrete gate or transistor logic devices, discrete hardware components, and the like. The processor 122 may implement or execute the methods, steps and logic blocks disclosed in embodiments of the disclosure. The general processor may be a microprocessor or any conventional processor, and the like. The steps of the method disclosed in embodiments of the disclosure may be executed and completed by a hardware decoding processor which is embodied directly or by a combination of hardware and software modules in the decoding processor. The software module may be located in a storage medium. The storage medium is located in the memory 123. The processor 122 reads the information in the memory 123, and completes the steps of the above method in combination with the hardware.

In an exemplary embodiment, the network device 120 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic component, for executing the above method.

It may be understood that, the memory (the memory 123) of embodiment of the disclosure may be a volatile or nonvolatile memory, and may also include both the volatile and nonvolatile memory. The nonvolatile memory may be a read-only memory (ROM), a programmable read only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be a magnetic disk memory or a magnetic tape memory. The volatile memory may be a random access memory (RAM), which is used as an external cache. By way of illustration, but not limitation, a plurality of forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory described in embodiments of the disclosure are intended to include, but not limited to, these and any other suitable types of memories.

In an exemplary embodiment, the embodiments of the disclosure further provide a storage medium, that is, a computer storage medium, specifically a computer-readable storage medium. For example, the storage medium includes the memory storing the computer program. The above computer program may be executed by the processor 122 of the network device 120 to complete the steps of the method in a network device side. The computer-readable storage medium may be a memory such as the FRAM, the ROM, the PROM, the EPROM, the EEPROM, the flash memory, the magnetic surface memory, the optical disk, the CD-ROM or the like.

It should be noted that, the term "first" and "second" are used to distinguish similar objects, and are not necessarily used to describe a specific order or sequence.

In addition, the technical solutions described in embodiments of the disclosure may be arbitrarily combined without conflict.

The above is only preferable embodiments of the disclosure, and is not used to limit the protection scope of the disclosure.

## Claims

1. A method for information transmission, applied to a first network function, comprising:
receiving a first message sent by a second network function, wherein the first message comprises requested first data information;
verifying the first message; and
sending a second message to the second network function, wherein the second message comprises first information indicating successful authorization and/or second data information indicating that a request is allowed.

2. The method according to claim 1, wherein the second data information is comprised in the first information.

3. The method according to claim 1 or 2, wherein the first information is a token, the second data information is a data type, and the data type is located within the token.

4. The method according to claim 1, wherein verifying the first message comprises:
verifying whether the second network function is capable of obtaining the first data information.

5. The method according to claim 1,wherein the first message further comprises at least one of:
a network element type of the second network function;
a network element type of a third network function; or
a service name that a target network function is expected to provide.

6. The method according to claim 1, wherein the first network function and the second network function belong to different public land mobile networks (PLMNs).

7. A method for information transmission, applied to a second network function, comprising:
sending a first message, wherein the first message comprises requested first data information; and
receiving a second message sent by a first network function, wherein the second message comprises first information indicating successful authorization and/or second data information indicating that a request is allowed.

8. The method according to claim 7, wherein the second data information is comprised in the first information.

9. The method according to claim 7 or 8, wherein the first information is a token, the second data information is a data type, and the data type is located within the token.

10. The method according to claim 7, further comprising: verifying the first message by the first network function, wherein
verifying the first message comprises:
verifying whether the second network function is capable of obtaining the first data information.

11. The method according to claim 7, wherein the first message further comprises at least one of:
a network element type of the second network function;
a network element type of a third network function; or
a service name that a target network function is expected to provide.

12. The method according to claim 7, further comprising:
sending a third message to a third network function, wherein the third message comprises at least one of:
the first information;
identification information of a public land mobile network (PLMN) where the second network function is located; or
third data information.

13. The method according to claim 12, wherein the third data information is part or all of the second data information.

14. The method according to claim 12, wherein the first information comprises the third data information.

15. The method according to claim 12, wherein the third message is Nnf_EventExposure_Subscribe or Nnwdaf_DataMangement_Subscribe.

16. The method according to claim 12, further comprising:
receiving data sent by the third network function.

17. The method according to claim 16, wherein the data is processed data.

18. The method according to claim 17, wherein the data is anonymized data and/or desensitized data.

19. A method for information transmission, applied to a third network function, comprising:
receiving a third message, wherein the third message comprises at least one of:
first information;
identification information of a public land mobile network (PLMN) where a second network function is located; or
third data information.

20. The method according to claim 18, wherein the third data information is part or all of second data information.

21. The method according to claim 19 or 20, wherein the first information comprises the third data information.

22. The method according to claim 19, wherein the third message is Nnf_EventExposure_Subscribe.

23. The method according to claim 19, further comprising: verifying at least one of:
the first information in the third message;
the identification information of the PLMN where the second network function is located; or
whether the third data information is related to data information requested by the third message.

24. The method according to claim 19, further comprising:
sending data to the second network function.

25. The method according to claim 24, wherein before sending the data to the second network function, the method further comprises:
processing the data.

26. The method according to claim 25, wherein processing the data comprises: anonymizing the data and/or desensitizing the data.

27. A method for information transmission, applied to a fourth network function, comprising:
receiving a third message, wherein the third message comprises at least one of:
first information;
identification information of a public land mobile network (PLMN) where a second network function is located; or
third data information.

28. The method according to claim 27, wherein the third data information is part or all of second data information.

29. The method according to claim 27 or 28, wherein the first information comprises the third data information.

30. The method according to claim 27, wherein the third message is Nnwdaf_DataMangement _Subscribe.

31. The method according to claim 27, further comprising: verifying at least one of:
the first information in the third message;
the identification information of the PLMN where the second network function is located; or
whether the third data information is related to data information requested by the third message.

32. The method according to claim 27, further comprising:
sending a fourth message to a third network function; and
receiving data sent by the third network function.

33. The method according to claim 27, further comprising:
sending data to the second network function.

34. The method according to claim 33, wherein before sending the data to the second network function comprises:
processing the data.

35. The method according to claim 34, wherein processing the data comprises: anonymizing the data and/or desensitizing the data.

36. An apparatus for information transmission, comprising:
a first receiving unit, configured to receive a first message sent by a second network function, wherein the first message comprises requested first data information;
a processing unit, configured to verify the first message; and
a first sending unit, configured to send a second message to the second network function, wherein the second message comprises first information indicating successful authorization and/or second data information indicating that a request is allowed.

37. An apparatus for information transmission, comprising:
a second sending unit, configured to send a first message, wherein the first message comprises requested first data information; and
a second receiving unit, configured to receive a second message sent by a first network function, wherein the second message comprises first information indicating successful authorization and/or second data information indicating that a request is allowed.

38. An apparatus for information transmission, comprising:
a third receiving unit, configured to receive a third message, wherein the third message comprises at least one of:
first information;
identification information of a public land mobile network (PLMN) where a second network function is located; or
third data information.

39. An apparatus for information transmission, comprising:
a fourth receiving unit, configured to receive a third message, wherein the third message comprises at least one of:
first information;
identification information of a public land mobile network (PLMN) where a second network function is located; or
third data information.

40. A network device, comprising a processor and a memory storing a computer program executable by the processor,
wherein when the computer program is executed by the processor, the method according to any one of claims 1 to 6 is implemented, or the method according to any one of claims 7 to 18 is implemented, or the method according to any one of claims 19 to 26 is implemented, or the method according to any one of claims 27 to 35 is implemented.

41. A computer-readable storage medium, having a computer program stored thereon, wherein when the computer program is executed by a processor, the method according to any one of claims 1 to 6 is implemented, or the method according to any one of claims 7 to 18 is implemented, or the method according to any one of claims 19 to 26 is implemented, or the method according to any one of claims 27 to 35 is implemented.
